# EUROPÄISCHE PATENTSCHRIFT

(11) **EP 2 043 831 B1**
(45) Veröffentlichungstag und Bekanntmachung des Hinweises auf die Patenterteilung: **27.02.2013**
(21) Anmeldenummer: 07720223.2
(22) Anmeldetag: 06.07.2007
(51) Int. Cl.: B29B 9/12, B29B 13/02, B29B 9/16

(54) **VERFAHREN ZUR KRISTALLISATION EINES LANGSAM KRISTALLISIERENDEN POLYMERS UND POLYMERGRANULAT**
PROCESS FOR THE CRYSTALLIZATION OF A SLOW-CRYSTALLIZATION POLYMER AND POLYMER GRANULATE
PROCÉDÉ DE CRISTALLISATION D'UN POLYMÈRE CRISTALLISANT LENTEMENT ET GRANULÉS POLYMÈRES

(30) Priorität: 21.07.2006 DE 102006034284
(43) Veröffentlichungstag der Anmeldung: 08.04.2009
(73) Patentinhaber: Bühler AG, 9240 Uzwil (CH); Automatik Plastics Machinery GmbH, 63762 Grossostheim (DE)
(72) Erfinder: CHRISTEL, Andreas, 9524 Zuzwil (CH); CULBERT, Brent Allan, 9500 Wil (CH); LOCKER, Peter, 63762 Grossostheim (DE)
(74) Vertreter: Hepp Wenger Ryffel AG
(86) Internationale Anmeldenummer: PCT/CH2007/000331
(87) Internationale Veröffentlichungsnummer: WO 2008/009144

(56) Entgegenhaltungen:
- EP-A2- 0 310 968
- EP-A2- 1 063 070
- WO-A1-03/037588
- DE-A1- 19 848 245
- JP-A- 7 171 828
- JP-A- 2003 048 991
- US-A1- 2005 056 961
- US-A1- 2005 261 126

## Beschreibung

Viele kristallisierbare Polymere werden im grossen Massstab hergestellt und verarbeitet.

Ein Beispiel dafür ist die Herstellung von Polyethylenterephthalat, das zu Holkörpern, wie Flaschen, verarbeitet wird. Sowohl im Herstellprozess, wie auch vor dem Verarbeitungsprozess muss das Material kristallisiert werden.

Um Polymerpartikel zu kristallisieren müssen diese so lange von einander getrennt oder zumindest relativ zueinander bewegt werden, bis eine ausreichende Kristallisation eingetreten ist, die ein Verkleben einzelner Partikel verhindert.

Verfahren zur Kristallisation von langsam kristallisierenden Polymeren insbesondere Polykondensaten sind im Stand der Technik ausreichend bekannt. So beschreibt zum Beispiel EP0379684, Rüssemeyer, die Kristallisation in zwei aufeinanderfolgenden Fliessbettapparaten.

Für sehr schwer kristallisierbare Polymere wird zum Beispiel in US 5532335, Kimball, eine Kristallisation unter Wasser vorgeschlagen, wobei das Wasser ein Verkleben einzelner Polymerteilchen vor und während der Kristallisation verhindern soll. Aus den genannten Beispielen und weiteren im Stand der Technik bekannten Schriften wird ersichtlich, dass der apparative Aufwand zur Kristallisation von Polymerpartikeln grösser wird, wenn die Kristallisationsgeschwindigkeit der Polymerpartikel abnimmt.

Demgegenüber ist es Aufgabe der vorliegenden Erfindung ein Verfahren zur Verfügung zu stellen, um langsam kristallisierende Polymere einfacher und schneller kristallisieren zu können.

Es ist eine weitere Aufgabe der vorliegenden Erfindung Polymerpartikel zur Verfügung stellen, die zu einem Grossteil aus einem langsam kristallisierbaren Polymer bestehen, sich aber trotzdem einfach und schnell kristallisieren lassen.

Weiterhin ist es Aufgabe der Vorliegenden Erfindung eine Vorrichtung zur Verfügung zu stellen, mit der sich Polymerpartikel herstellen und kristallisieren lassen, die zu einem Grossteil aus einem langsam kristallisierenden Polymer bestehen

Die erfindungsgemässe Vereinfachung wird dadurch erreicht, dass Polymergranulate hergestellt und kristallisiert werden, die um das langsam kristallisierende Polymer eine Aussenschicht aus einem schneller kristallisierenden Polymer aufweisen. Überraschenderweise ist es dabei nicht notwendig eine vollständig geschlossene Aussenschicht zu bilden.

Obwohl im Stand der Technik verschiedene Verfahren zur Herstellung mehrschichtiger Polymerpartikel bekannt sind, so wurde deren Anwendung zur Vereinfachung eines Kristallisationsprozesses bisher nicht erkannt.

DE 1667264, Sommerville, beschreibt zum Beispiel ein Herstellverfahren für mehrschichtige Granulate. Eine weiterführende Kristallisation wird aber nicht erwähnt.

WO 2005/110694, Ferrari, beschreibt die Herstellung von mehrschichtigen Granulaten, wobei jeweils unterschiedliche Polymere, die sich vor allem in ihrer Reaktivität unterscheiden, verwendet werden. Die Möglichkeit einer anschliessenden Kristallisation wird beschrieben. Die Vorteile einer gezielten Polymerauswahl aufgrund der Kristallisationseigenschaften oder die Verwendung zweier Ausführungen eines Polymertyps mit unterschiedlichen Kristallisationseigenschaften werden nicht erkannt.

US6669986, Mushiake, beschreibt eine Trocknungsprozess, bei dem ein klebriges Polyester mit einem weniger klebrigen Polyester ummantelt wird, um eine höhere Trocknungstemperatur ohne Verklebungen einsetzen zu können. Obwohl grundsätzlich die Möglichkeit einer Kristallisation beschrieben wird, werden die Vorteile einer gezielten Polymerauswahl aufgrund der Kristallisationseigenschaften oder die Verwendung zweier Ausführungen eines Polymertyps mit unterschiedlichen Kristallisationseigenschaften nicht erkannt.

EP 1063070 offenbart eim Verfahren gemäß dem Oberbegriff des Anspruchs 1 sowie ein Granulat gemäβ dem Oberbegriff des Anspruchs 17.

Die Aufgabe wird gemäss Anspruch 1 durch ein Verfahren mit den folgenden Prozessschritten gelöst:
a) Herstellen einer Polymerschmelze A aus einem kristallisierbaren Polymer,
b) Herstellen einer Polymerschmelze B aus einem kristallisierbaren Polymer
c) Zusammenführen der Polymerschmelzen A und B in einer Vielzahl von Schmelzekanälen, wobei die Polymerschmelze B im wesentlichen eine Aussenschicht und die Polymerschmelze A im wesentlichen eine Innenschicht bildet,
d) Formen von Partikeln und Verfestigen der Polymerschmelzen, wobei das Formen der Partikel vor oder nach dem Verfestigen erfolgen kann,
e) Anheben des Kristallisationsgrades der Polymerpartikel,
   dadurch gekennzeichnet, dass das durch Verfestigen von Polymerschmelze B erzeugte Polymer B eine höhere Kristallisationsrate aufweist als das durch Verfestigen von Polymerschmelze A erzeugte Polymer A.

Eine bevorzugte Ausführung sieht vor, dass Polymer A und B Polymere des gleichen Polymertyps umfassen. Daraus ergibt sich der Vorteil, dass ein im Wesentlichen einheitliches Material einer Weiterverarbeitung zugeführt werden kann.

Die Polymere A und B umfassen Polyethylenterephthalat oder dessen Copolymere.

Eine höhere Kristallisationsrate für das in der Aussenschicht vorliegende Polymer B lässt sich dabei zum Beispiel durch die in den Unteransprüchen genannten Massnahmen erreichen.

Eine bevorzugte Ausführung sieht vor, dass Polymer B einen geringeren Anteil an Comonomer aufweist als Polymer A. Daraus ergibt sich der Vorteil, dass dem Polymer keine Fremdstoffe zugesetzt werden müssen.

Handelt es sich bei Polymer A und Polymer B um Copolymere eines Polymertyps, die die gleichen Haupt-Monomere enthalten, soll Polymer B einen geringeren Anteil an Comonomer aufweisen. Die Menge an Copolymer die ein Granulat insgesamt enthält, berechnet sich dabei aus den durchschnittlichen Comonomer-Gehalten beider Polymere, gewichtet nach dem Gewichtsanteil der Polymere im Granulat.

Gemäss einer weiteren bevorzugten Ausführung enthält die aussen liegende Polymerschmelze B eine höhere Menge an Nukleierungsmitteln als Polymerschmelze A. Daraus ergibt sich der Vorteil, dass bei zwei eher langsam kristallisierenden Polymeren nur eines für eine raschere Kristallisation mit Nukleierungsmitteln versehen sein muss.

Gemäss weiteren bevorzugten Ausführungen enthält die aussen liegende Polymerschmelze B eine höhere Menge an Treibmitteln und/oder Lösemittel als die Polymerschmelze A. Insbesondere bei der Verwendung von Lösemitteln oder physikalischer Treibmittel ergibt sich dabei der Vorteil, dass das Lösemittel oder Treibmittel während der Kristallisation im Wesentlichen entfernt wird und ein einheitliches Material einer Weiterverarbeitung zugeführt werden kann.

Gemäss einer weiteren bevorzugten Ausführung enthält die aussen liegende Polymerschmelze B Polymer A und zumindest eine weitere Komponente zur Kristallisationsbeschleunigung, wie Nukleierungsmittel, Lösemittel oder Treibmittel. Daraus ergibt sich der Vorteil, dass nur eine Polymerschmelze hergestellt werden muss, die dann in zwei Teilströme aufgeteilt werden kann, wobei nur einem Teilstrom eine weitere Komponente zur Kristallisationsbeschleunigung zugesetzt werden muss.

Gemäss einer weiteren bevorzugten Ausführung enthält die aussen liegende Polymerschmelze B einen geringeren Anteil an Weichmachern als Polymerschmelze A. Hier ergibt sich der Vorteil, dass ein eigentlich gut kristallisierbares Polymer, dessen Kristallisation aber durch eine Weichmacherzugabe behindert ist, trotzdem seine ursprünglichen Kristallisationseigenschaften beibehält.

Gemäss einer weiteren bevorzugten Ausführung umfasst das aussen liegende Polymer B ein rezykliertes Polymer. Enthalten beide Polymere einen rezyklierten Anteil, so enthält Polymer B einen höheren Rezyklatanteil als Polymer A.

Handelt es sich bei den Polymeren um Polyethylenterephthalat, so handelt es sich bei dem Rezyklat bevorzugterweise um gereinigte Lebensmittelbehälter, insbesondere Getränkeflaschen aus Polyethylenterephthalat.

Geeignete Polymere sind kristallisierbare thermoplastische Polymere. Die Polymere werden durch eine Polymerisationsreaktion, wie zum Beispiel radikalische, anionische oder kationische. Polymerisation, Polyaddition oder Polykondensation aus ihren Monomeren gewonnen. Polymere eines Polymertyps werden aus den gleichen Hauptmonomeren gewonnen. Eine begrenzte Menge weiterer Monomere, sogenannter Comonomere, kann dabei zum Einsatz kommen. Der Comonomergehalt soll dabei aber 25%, gemessen als mol% aller Monomere, nicht überschreiten.

Ein Beispiel ist Polyoxymethylen (POM), das üblicherweise durch kationische oder aninische Polymerisation aus seinem Monomeren Formaldehyd oder seinem Trimeren Trioxan

Insbesondere handelt es sich um kristallisierbare thermoplastische Polykondensate, wie Polyamid, Polyester, Polykarbonat, Polyhydroxyalkanoate, Polylaktide oder deren Copolymere.

Polykondensate werden durch eine Polykondensationsreaktion unter Abspaltung eines niedermolekularen Reaktionsproduktes gewonnen. Dabei kann die Polykondensation direkt zwischen den Monomeren erfolgen oder über eine Zwischenstufe, die anschliessen durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist das so gewonnene Polykondensat linear, wobei eine geringe Anzahl an Verzweigungen entstehen kann.

Polykondensate eines Polymertyps werden aus den gleichen Hauptmonomeren gewonnen. Eine begrenzte Menge weiterer Monomere, sogenannter Comonomere, kann dabei zum Einsatz kommen. Der Comonomergehalt soll dabei aber 25%, gemessen als mol% aller Monomere, nicht überschreiten.

Bei Polyester handelt es sich dabei um ein Polymer, das üblicherweise durch Polykondensation aus seinen Monomeren, einer Diol-Komponente und einer Dikarbonsäure-Komponente, gewonnen wird. Verschiedene, meist lineare oder zyklische Diol-Komponenten kommen zum Einsatz. Ebenso können verschiedene meist aromatische Dikarbonsäure-Komponenten zum Einsatz kommen. Anstelle der Dikarbonsäure kann auch ihr entsprechender Dimethylester eingesetzt werden.

Typische Beispiele der Polyester sind Polyethylenterephthalat (PET), Polybutylenterephthalat (PBT) und Polyethylennaphthalat (PEN) die entweder als Homopolymer oder als Copolymere zum Einsatz kommen.

Das Polyethylenterephthalat wird aus seinen Monomeren, einer Diol-Komponente und einer Dikarbonsäure-Komponente, gewonnen, wobei die Diol-Komponenten als Hauptmonomer aus Ethylenglykol (1,2 Ethandiol) und die Dikarbonsäure-Komponenten als Hauptmonomer aus Terephthalsäure besteht. Als Comonomere kommen weitere lineare, zyklische oder aromatische Diol- und Dikarbonsäureverbindungen in Frage. Typische Comonomere sind Diethylenglykol (DEG), Isophthalsäure (IPA) oder 1,4-Bishydroxymethyl-cyclohexan (CHDM).

Bei Polyhydroxyalkanoaten handelt es sich um Polymere, die durch Polykondensation aus seinen Monomeren, mit der allgemeinen Formel HO-CH(R)-(CH2)ₙ-COOH gewonnen werden, wobei R üblicherweise einen aliphatischen Kohlenwasserstoff mit 1 bis 15 Kohlenstoffatomen darstellt und n = 1 bis 10, üblicherweise 1 bis 3 beträgt. Ein typisches Beispiel ist Polyhydroxybutyrat mit R = CH3 und n = 1.

Bei den Polylaktiden (bekannt als Polylactic acid, PLA) handelt es sich um Polymere, die direkt unter Wasserabspaltung aus Milchsäure oder durch Ringöffnungspolymerisation aus seinen zyklischen Dimeren (Lactiden) gewonnen werden können.

Bei dem Polymer kann es sich um ein Neumaterial oder um ein Rezyklat handeln. Als Rezyklate werden wiederaufbereitete Polymere aus den Herstell- und Verarbeitungsprozessen (post industrial) oder nach dem Konsumentengebrauch gesammelte und wiederaufbereitete Polymere (post consumer) bezeichnet.

Dem Polymeren können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen usw.

Der Begriff Additive beschränkt sich bei der vorliegenden Erfindung auf Substanzen die Bestandteil der Polymerschmelze sind. Substanzen, die nachträglich durch Diffusion in die Polymerpartikel eindringen, werden dabei nicht als Additive bezeichnet.

Für die vorliegende Erfindung werden zumindest zwei Polymerschmelzen (A und B), insbesondere aus Polymeren des gleichen Polymertyps, benötigt, wobei sich die aus den Polymerschmelzen gewonnenen Polymere durch ihre Kristallisationsrate unterscheiden. Die Unterschiede der Kristallisationsrate ergeben sich aufgrund unterschiedlicher Polymerarten, aufgrund unterschiedlicher Comonomergehalte einer Polymerart, aufgrund unterschiedlicher Mengen an Weichmachern, Nukleierungsmitteln oder Lösungsmitteln sowie unterschiedlicher Stärke einer Vororientierung, die zum Beispiel durch ein Treibmittel verursacht wurde.

Als Weichmacher werden in diesem Zusammenhang Additive bezeichnet, die die Kristallisationsrate eines Polymeren reduzieren.

Als Lösungsmittel werden in diesem Zusammenhang Additive bezeichnet, die die Kristallisationsrate eines Polymeren durch sogenannte lösemittelinduzierte Kristallisation beschleunigen.

Als Treibmittel werden in diesem Zusammenhang Additive bezeichnet, die eine Expansion des Polymeren verursachen. Hier werden chemische und physikalische Treibmittel unterschieden. Physikalische Treibmittel sind zum Beispiel Gase die unter Druck mit dem Polymeren vermischt werden und bei der Entspannung des Polymeren expandieren. Chemische Treibmittel sind zum Beispiel Substanzen, die sich bei erhöhter Temperatur zersetzen, wobei zumindest Teile der Zersetzungsprodukte bei der Entspannung der Polymere expandieren. Die nicht expandierenden Rückstände der chemischen Treibmittel können gleichzeitig als Nukleierungsmittel wirken.

Nukleierungsmittel sind im Stand der Technik bekannte Additive und bewirken eine raschere Kristallbildung (Keimbildung) im Polymer, was sich durch eine höhere Kristallisationsrate ausdrückt.

Als Nukleierungsmittel können zum Beispiel anorganische Partikel, organische, im Polymer zumindest teilweise unlösliche Komponenten oder lonomere des gleichen Polymertyps verwendet werden.

Für Polyethylenterephthalat geeignete Nukleierungsmittel sind zum Beispiel Talk, Kalziumkarbonat, Kohlenstoff, Eisenoxyd, wie auch Polyamide, Polyolefine, insbesondere niedermolekulare Polyolefinwachse sowie Polyesterionomere, insbesondere Natrium terminierte Polyethylenterephthalationomere.

Die Kristallisationsrate beschreibt die Geschwindigkeit, mit der der Kristallisationsgrad des amorphen Produktes bei einer gegebenen Behandlungstemperatur ansteigt. Die Kristallisationsrate lässt sich zum Beilspiel durch isotherme Kristallisation im DSC ausgehend von amorphem Produkt bestimmen, wobei insbesondere die Halbwertszeit zum Vergleich verwendet werden kann. Indirekt lässt sich ein Unterschied der Kristallisationsraten auch im DSC mittels einer Abkühlkurve aus der Schmelze bestimmen, wobei das Material mit dem Kristallisationspeak bei einer höheren Temperatur die höhere Kristallisationsrate aufweist.

Das Herstellen einer Polymerschmelze erfolgt in im Stand der Technik bekannten Apparaten oder Reaktoren. Grundsätzlich kommen Polymerisationsreaktoren in Frage, in denen Polymere in flüssiger Phase hergestellt werden, wie zum Beispiel Rührkessel, Käfigreaktoren oder Scheibenreaktoren, oder Apparaturen in denen zuvor hergestellte Polymere aufgeschmolzen werden, wie zum Beispiel Extruder oder Kneter. Die Polymerschmelzeherstellung kann kontinuierlich oder batchweise erfolgen. Für die weitere Verarbeitung sind aber kontinuierliche Prozesse bevorzugt. Zur Herstellung von zwei oder mehreren Polymerschmelzen, können zwei oder mehrere separate Apparate verwendet werden. Es besteht aber auch die Möglichkeit eine Polymerschmelze herzustellen und diese in zwei oder mehrere Teilströme aufzuteilen, wobei dann zumindest einem der Teilströme eine weitere Komponente, insbesondere ein Additiv, zugefügt wird. Das Zugeben von Additiven kann direkt in die Apparate zur Schmelzeherstellung oder in einem nachfolgenden Mischaggregat erfolgen.

Unerwünschte flüchtige Substanzen, wie Verunreinigungen aus einem Rezyklat, verbleibende Lösemittel aus der Polymerherstellung sowie Monomere, Dimere, Oligomere oder Spaltprodukte aus der Polymerschmelzeherstellung können über eine Entgasungsvorrichtung, wie Dünnschichtverdampfer oder Extruder, insbesondere Mehrwellenextruder, wie Zweiwellenextruder oder Ringextruder, entfernt werden, wobei es sich zumeist um eine partielle Entfernung auf einen Wert von 1 - 70% vom Ausgangswert handelt.

Zum Zusammenführen der Polymerschmelzen können im Stand der Technik bekannte Coextrusionsverfahren zur Herstellung von ummantelten Polymersträngen eingesetzt werden, wobei jeweils eine Vielzahl an Polymersträngen hergestellt werden muss. Beispiele dafür geben die Patentschriften US4900572, Repholz und US5747548, Bradt, die durch Referenz mit eingeschlossen werden.

Bevorzugterweise werden zunächst beide Polymere in eine Vielzahl an individuellen Schmelzekanälen aufgeteilt und danach zusammengeführt, wobei die Schmelzekanäle für Polymer B die Austrittsöffnungen der Schmelzekanäle für Polymer A umschliessen. Die Schmelzekanäle enden in einer Austrittsvorrichtung, insbesondere einer Düse oder Düsenplatte, wobei die Austrittsvorrichtung für jeden Schmelzekanal eine Austrittsöffnung umfasst. Üblicherweise liegen die Austrittsöffnungen auf zumindest einer geraden oder gebogenen, insbesondere kreisförmigen, Linie, wobei die Austrittsöffnungen auch auf mehreren, im Wesentlichen parallelen oder konzentrischen, Linien angeordnet sein können. Üblicherweise sind die individuellen Schmelzekanäle parallel zueinander und senkrecht zur Stirnseite der Austrittsvorrichtung angeordnet. In einigen Fällen kann es von Vorteil sein zumindest einige der individuellen Schmelzekanäle so anzuordnen, dass sie sich zur Austrittsöffnung hin voneinander entfernen. Die Schmelzekanäle können dabei eine beliebige Querschnittsform aufweisen. Bevorzugterweise entspricht die Querschnittsform der äusseren Schmelzekanäle der Querschnittsform der inneren Schmelzekanäle. Üblicherweise sind runde Schmelzekanalquerschnitte bevorzugt. Die Austrittsöffnungen der Schmelzekanäle für Polymer A befinden sich bevorzugterweise zentrisch in den Schmelzekanälen für Polymer B. Die Flussrichtungen für Polymer A und Polymer B sollen dabei identisch sein. Um Turbulenzen beim Zusammenführen zu vermindern, sollen die Wandstärken der inneren Polymerschmelzekanalleitungen zum Austritt hin graduell verringert werden. Dies kann entweder durch eine Reduktion der Aussendurchmesser oder durch Aufweitung der Innendurchmesser erfolgen. Besonders wenn dünne Oberflächenschichten hergestellt werden sollen, ist ein Aufweiten der Innendurchmesser der inneren Polymerschmelzekanalleitungen von Vorteil. Der Konuswinkel zur Durchmesserreduktion soll dabei bevorzugterweise weniger als 45°, insbesondere zwischen 10 und 30° betragen.

Um bei der Verwendung von Polymerschmelzen mit unterschiedlichen Fliesseigenschaften ein Vermischen oder gar ein Invertieren der Polymerschichten zu verhindern, soll der Abstand zwischen den Austrittsöffnungen der inneren und äusseren Schmelzekanäle ein relativ geringer gehalten werden. Der Abstand soll bevorzugterweise weniger als 50mm, insbesondere zwischen 1 und 30mm betragen. Weiterhin kann es von Vorteil sein, wenn nach dem Zusammenführen der Polymerschmelzen keine wesentliche Reduktion der Querschnittsfläche der Schmelzekanäle mehr erfolgt. Optional kann aber auch nach dem Zusammenführen der Polymerschmelzen eine Reduktion der Querschnittsfläche der äusseren Schmelzekanäle erfolgen.

In der Austrittsvorrichtung werden aus den Polymerschmelzen einzelne Polymerstränge geformt.

Zur Herstellung von Granulaten aus den Polymersträngen können die im Stand der Technik bekannten Granulationstechniken, wie Stranggranulation, Wasserringgranulation, Unterwassergranulation oder Kopfgranulation (auch hot face - Granulation) verwendet werden. Dabei werden die Polymerstränge die aus den Schmelzekanälen austreten verfestigt und in eine Vielzahl an einzelnen Granulaten aufgetrennt, wobei das Auftrennen vor oder nach dem Verfestigen erfolgen kann.

Trotz der Verwendung des Begriffs "Wasser" in der Bezeichnung der Granulationseinrichtungen können auch andere Fluide, Fluidgemische, Flüssigkeiten, Flüssigkeitsgemische oder Flüssigkeiten mit gelösten, emulgierten oder suspendierten Substanzen verwendet werden.

Das Auftrennen erfolgt zum Beispiel durch eine selbstständige Tropfenbildung, durch den Einsatz eines flüssigen Schermediums oder durch ein mechanisches Trennen, insbesondere Schneiden.

Während eine selbstständige oder eine durch ein Schermedium erzwungene Tropfenbildung am Düsenaustritt erfolgt, kann ein Schneiden sowohl direkt am Düsenaustritt erfolgen oder aber erst nach dem Durchlaufen einer Behandlungsstrecke.

Das Verfestigen der Polymerschmelze erfolgt durch Kühlen. Dies kann mit Hilfe eines flüssigen Kühlmediums (z. B. Wasser, Ethylenglykol) oder gasförmigen Kühlmediums (z. B. Luft, Stickstoff, Wasserdampf) erfolgen, oder durch Kontakt mit einer kalten Oberfläche, wobei auch Kombinationen der Kühlmedien denkbar sind.

Es ist darauf zu achten, die Produktflussmenge pro Düsenloch zeitlich und örtlich in einem engen Bereich zu halten, wobei die Standardabweichung der einzelnen Produktflussmengen üblicherweise zwischen 0.1 und 10% gehalten werden soll. Um dies zu erreichen, kann je nach Position eines Düsenloches deren Durchmesser oder Länge variiert sein. Gleichzeitig ist auf möglichst gleichmässige Anströmbedingungen (Druck, Geschwindigkeit, Temperatur, Viskosität usw.) der einzelnen Düsenlöcher zu achten. Die mittlere Granulatgrösse soll zwischen 0.1 mm und 10mm, bevorzugterweise zwischen 0.5mm und 3mm und insbesondere zwischen 0.85 und 2.5mm liegen. Als mittlere Granulatgrösse gilt der statistische Mittelwert des mittleren Granulatdurchmessers, der sich aus dem Durchschnitt aus Granulathöhe, -länge und -breite ergibt. Die Granulatgrössenverteilung soll in einem engen Spektrum gehalten werden. Üblicherweise ist die Standardabweichung der Granulatgewichte von 100 gemessenen Granulaten zwischen 2 und 20%.

Die Granulate sollen bevorzugterweise eine definierte Granulatform, wie zum Beispiel zylinderförmig, kugelförmig, tropfenförmig, kugelähnlich oder einer Design-Form, wie sie zum Beispiel in EP 0541 674, Yau vorgeschlagen ist, aufweisen. Unregelmässig körnige Produktformen, wie sie aus einem Mahlprozess oder Brechprozess entstehen, sind nicht geeignet, da dadurch die Schichtstruktur zerstört würde.

Bevorzugterweise werden massive Granulate ohne Gaseinschlüsse oder Vakuolen hergestellt. Eine besondere Ausführung der vorliegenden Erfindung sieht aber vor, dass Polymer B ein Treibmittel enthält, das beim Austritt aus der Düse eine Expansion der Aussenschicht und somit eine rascher kristallisierende Polymerstruktur verursacht, was auf die während der Expansion erfolgten molekularen Verstreckung und der daraus resultierenden Orientierung zurückgeführt wird.

Die Abkühlung kann auf eine Temperatur erfolgen, die unterhalb einer Klebrigkeitstemperatur der Polymergranulate, insbesondere unter der Glasübergangstemperatur von Polymer B, liegt, was die Lagerung und/oder den Transport der Granulate über einen längeren Zeitraum erlaubt.

Die durchschnittliche Temperatur der Polymergranulate kann aber auch auf einem höheren Niveau, insbesondere über der Glasübergangstemperatur von Polymer B, gehalten werden, um die Energieeffizienz des Prozesses zu verbessern. Dazu ist es möglich, die Temperatur des Kühlmediums anzuheben und/oder die Verweilzeit im Kühlmedium entsprechend kurz zu wählen. Zweckmässig sind Temperaturen zwischen 80°C und 5°C unter der Schmelztemperatur von Polymer B.

Wird ein Polymerstrang erst nach dem Verfestigen geschnitten, so müssen beide Polymere im Strang ausreichende Festigkeit aufweisen, um ein Herausquetschen der inneren Schicht zu verhindern.

Nach dem Abkühlen wird das Kühlmedium von den Granulaten getrennt. Optional erfolgt eine Behandlung (Konditionierung) der Granulate in einem flüssigen Medium, wobei dazu direkt das Kühlmedium oder eine andere Flüssigkeit verwendet werden kann.

Das Trennen der Granulate von einem flüssigen Kühlmedium erfolgt in im Stand der Technik bekannten Trennvorrichtungen. Dabei kann es sich lediglich um passive Trennvorrichtungen, wie zum Beispiel Gitter oder Roste, handeln, durch die das Kühlmedium, nicht aber das Granulat durchtreten kann. Üblicherweise werden aber aktive Trennvorrichtungen zumindest für einen Teil der Trennung verwendet, wobei die Trennung zum Beispiel aufgrund einer Gasdurchströmung, einer Zentrifugalkraft oder eines Aufpralls erfolgt. Solche Vorrichtungen sind zum Beispiel als Absaugvorrichtungen, Pralltrockner oder Zentrifugaltrockner bekannt. Ebenso kann ein Teil der Trennung mittels einem ungesättigten, optional erwärmten, Gasstrom durch Verdampfen des Kühlmediums erfolgen.

Nach dem Verfestigen der Polymerschmelze erfolgt ein Schritt zur zumindest teilweisen Kristallisation der Polymere gemäss den im Stand der Technik bekannten Verfahren. Die Kristallisation kann kontinuierlich oder batchweise erfolgen. Die Kristallisation kann schon vor dem Formen der Partikel erfolgen. Üblicherweise werden aber die Partikel in einem separaten Schritt einer Wärmebehandlung unterzogen, um eine Kristallisation zu bewirken. Die Wärmebehandlung kann dabei unter Ausnutzung der Restwärme im Polymer (Latentwärme) oder unter Zugabe von Prozesswärme von aussen erfolgen. Die Wärmebehandlung kann auch durch eine Kombination aus Latentwärme und zugeführter Wärme erfolgen. Eine Wärmezufuhr kann über eine beheizte Wand des Kristallisationsreaktors, über beheizte Einbauten im Kristallisationsreaktor, durch Strahlung oder durch Einblasen eines heissen Prozessgases erfolgen.

Die Kristallisation kann aus dem Glaszustand, das heisst nach vorübergehender Abkühlung auf eine Temperatur unterhalb der Kristallisationstemperatur, insbesondere unterhalb der Glasübergangstemperatur Tg erfolgen. Alternativ kann die Kristallisation auch direkt aus der Schmelze erfolgen.

Eine bevorzugte Ausführung der vorliegenden Erfindung sieht vor, dass zur Ausnutzung der Restwärme im Polymer eine Austrittsöffnung für Polymergranulat aus der Trennvorrichtung direkt mit einer Eintrittsöffnung in eine Kristallisationsvorrichtung verbunden ist. Die Verbindung erfolgt zum Beispiel über eine Rohrleitung oder durch Integrieren der Trennvorrichtung und der Kristallisationsvorrichtung in ein gemeinsames Gehäuse. Die Distanz zwischen den beiden Vorrichtungen soll dabei möglichst gering sein. Bevorzugt ist eine Distanz von weniger als 5m, insbesondere weniger als 3m, wobei bei sehr grossen Kristallisationsvorrichtungen eine Distanz von weniger als 3 Mal, insbesondere weniger als 2 Mal, der Wurzel aus der Querschnittsfläche der Kristallisationsvorrichtung bevorzugt ist.

Eine weitere bevorzugte Ausführung sieht vor, dass Austrittsöffnungen mehrerer Trennvorrichtungen mit der Kristallisationsvorrichtung verbunden sind. Daraus ergibt sich der Vorteil, dass bei alternierendem Betrieb mehrerer Trennvorrichtungen eine konstante Granulatmenge der Kristallisationsvorrichtung zugeführt wird.

Alternativ zur Kristallisation durch Wärmeeinwirkung sind auch Verfahren zur Kristallisation durch mechanische Verstreckung denkbar.

Der geeignete Temperaturbereich für die Kristallisation wird ersichtlich, wenn man die Kristallisationshalbwertszeit (t½) als Funktion der Temperatur aufzeichnet. Er ist nach oben und unten begrenzt durch die Temperatur, bei der die Kristallisationshalbwertszeit das ungefähr 10-Fache der minimalen Kristallisationshalbwertszeit erreicht. Da sehr kurze Kristallisationshalbwertszeiten (t½) nur schwer bestimmbar sind, wird als Minimalwert t½= 1 Minute eingesetzt. Bei Polyethylenterephthalat liegt der Temperaturbereich zwischen 100 und 220°C, und es wird ein Kristallisationsgrad von zumindest 20%, bevorzugterweise von zumindest 30% erreicht.

Die geeignete Kristallisationszeit ergibt sich aus der Zeit um das Produkt in den geeigneten Temperaturbereich zu bringen plus zumindest der Kristallisationshalbwertszeit bei der gegebenen Temperatur, wobei bevorzugterweise 2-30 Halbwertszeiten zur Aufheizzeit dazugezählt werden.

Um ein Verkleben der kristallisierenden Polymergranulate zu verhindern, sollen diese relativ zueinander in Bewegung gehalten werden. Dies kann z.B. durch den Einsatz eines Rührwerkes, eines bewegten Behälters oder Behältereinbaus oder unter Einwirkung eines Fluidisierungsgases erfolgen. Weiterhin lassen sich Verklebungen durch Vermischung zwischen amorphen Partikeln und bereits kristallinen Partikeln verhindern.

Besonders geeignete Kristallisationsreaktoren sind vibrierende Rinnen, Reaktoren mit Rührwerken, sowie Fliessbett- oder Wirbelbettkristallisatoren, da diese nicht zur Staubbildung neigen.

Gleichzeitig mit dem Anheben des Kristallisationsgrades, werden auch allfällige Reste einer Flüssigkeit aus dem Granulierprozess, sowie andere unerwünschte flüchtige Substanzen, zumindest teilweise entfernt.

Wird im Kristallisationsprozess ein Prozessgas im Kreislauf verwendet, so muss diesem genügend Frischgas oder gereinigtes Prozessgas zugesetzt werden, um eine übermässige Anreicherung der Flüssigkeit und/oder der flüchtigen Substanzen zu verhindern.

Erfindungsgemäss weist das Polymer B eine höhere Kristallisationsrate auf als das Polymer A. Dadurch entstehen Partikel, die an der Oberfläche mehrheitlich ein schneller kristallisierendes Polymer aufweisen, das das langsamer kristallisierende Polymer im Wesentlichen einschliesst oder umhüllt. Lediglich an den Schnittkanten kann ein Teil der Oberfläche aus dem langsamer kristallisierenden Material bestehen. Zwischen 50% und 95%, insbesondere mehr als 65%, der Oberfläche sollen aus dem rascher kristallisierenden Material bestehen. Daraus ergibt sich der Vorteil, dass sich bei der Kristallisation rasch eine kristalline Oberflächenschicht bildet, was wiederum die Klebeneigung der Partikel verringert.

Als besonders vorteilhaft erweist sich die vorliegende Erfindung, wenn ein Polymer A mit einer geringen Menge an Polymer B umhüllt werden kann, wodurch sich Partikel mit geringer Oberflächenklebrigkeit und trotzdem einer insgesamt langsamen Kristallisationsrate ergeben. Gemäss einem der Unteransprüche soll dazu das Volumen der Polymerpartikel im Durchschnitt zu 50% bis 95%, insbesondere zu mehr als 65%, aus dem langsamer kristallisierenden Material bestehen.

Optional erfolgt nach dem Schritt zum Anheben des Kristallisationsgrades ein weiterer Schritt zur thermischen Behandlung. Die thermische Behandlung kann im Vakuum oder unter Durchströmung eines Gases erfolgen. Dabei kann es sich um einen Schritt zur weiteren Ausbildung der Kristallstruktur, um einen Schritt zur Trocknung oder Befeuchtung, um einen Schritt zur Festphasenpolykondensation (SSP) und/oder um einen Schritt zur Entfernung unerwünschter flüchtiger Substanzen, wie Verunreinigungen aus einem Rezyklat, verbleibende Lösemittel aus der Polymerherstellung sowie Monomere, Dimere, Oligomere oder Spaltprodukte aus der Polymerschmelzeherstellung, handeln. Beispiele für die die Entfernung von unerwünschten Substanzen sind die Entfernung von Restmonomeren oder Dimeren aus Polyamiden, Polyhydroxyalkanoaten oder Polylaktiden, sowie die Entfernung von Verunreinigungen aus regranuliertem PET Flaschenmaterial. SSP Verfahren sind im Stand der Technik ausreichend bekannt und werden zum Beispiel in Modem Polyesters beschrieben. (Modem Polyesters, Wiley Series in Polymer Science, Edited by J. Scheirs, T. Long; John Wiley & Sons; 2003)

Ein Ausführungsbeispiel der vorliegenden Erfindung wird anhand der folgenden Figuren erklärt.
- Figur 1: zeigt ein Beispiel der erfindungsgemässen Vorrichtung
- Figur 2: zeigt einen Ausschnitt aus dem Bereich der Schmelzekanalführung
- Figur 3: zeigt einen Ausschnitt aus dem Bereich der Schmelzezusammenführung
- Figur 4: zeigt Schnittbilder durch erfindungsgemässe Granulate aus einer Unterwassergranulation
- Figur 5: zeigt Schnittbilder durch erfindungsgemässe Granulate aus einer Stranggranulation

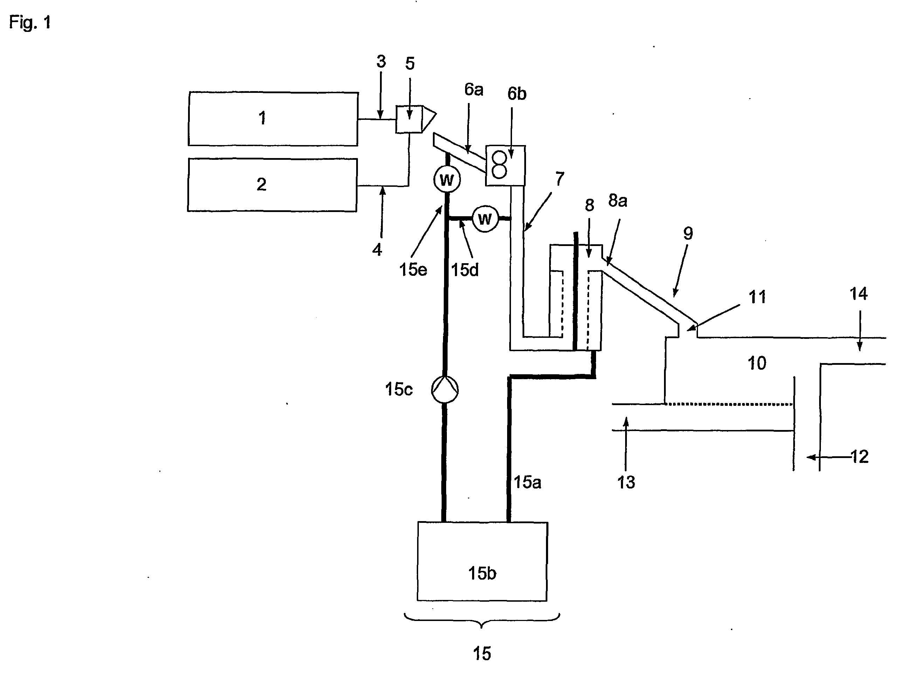

In Figur 1 sind zunächst zwei Reaktoren (1, 2) zur Herstellung von zwei Polymerschmelzen dargestellt. Beiden Reaktoren können über nicht dargestellte Dosiervorrichtungen Polymere und Additive zugeführt werden. Aus dem ersten Reaktor (1) fliesst Polymerschmelze B durch eine Schmelzeleitung (3) in Düse (5). Aus dem zweiten Reaktor (2) fliesst Polymerschmelze A durch eine Schmelzeleitung (4) in Düse (5). In der Düse (5) werden die Polymerschmelzen so geführt, dass eine Vielzahl an Polymersträngen entsteht, die jeweils eine Innenschicht aus Polymer A und eine Aussenschicht aus Polymer B aufweisen. Die Stränge werden in der Kühlvorrichtung (6a) abgekühlt und ausreichend verfestigt um ein Schneiden in der Schneidvorrichtung (6b) zu ermöglichen, wo die Polymerstränge in einzelne Granulate geschnitten werden. Der Kühlvorrichtung (6a) wird über Leitung (15e) durch einen Wärmetauscher (W) temperiertes Kühlwasser zugeführt. Aus der Schneidvorrichtung (6b) werden die Granulate über eine optionale Behandlungsstrecke (7) in eine Trennvorrichtung (8) geführt. Der Behandlungsstrecke (7) kann über Leitung (15d) weiteres durch einen Wärmetauscher (W) temperiertes Kühlmedium zugeführt werden. In der Trennvorrichtung (8), die hier als Zentrifugaltrockner ausgeführt ist, werden die Polymergranulate vom Kühlwasser getrennt. Die Polymergranulate gelangen über Austragsöffnung (8a) in eine Transferleitung (9) in die Eintrittsöffnung (11) der Kristallisationsvorrichtung (10). In der Kristallisationsvorrichtung (10) werden die Granulate in einem heissen Gasstrom, der durch Eintrittsöffnung (13) und einen Siebboden zugeführt und durch Austrittsöffnung (14) weggeführt wird, kristallisiert. Die Granulate können über Austrittsöffnung (12) einer Lagerung oder weiteren Behandlung zugeführt werden.

Das Kühlwasser wird aus der Trennvorrichtung (8) über Leitung (15a) in einen Pufferbehälter (15b) geführt und kann von da über eine Pumpe (15c) im Kreislauf wiederverwendet werden.

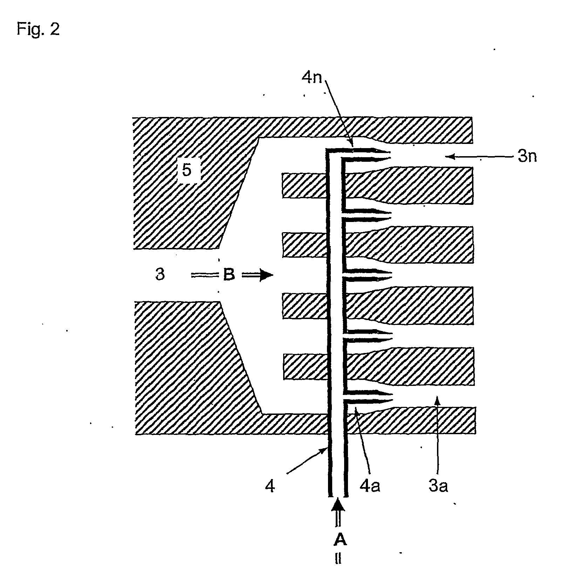

In Figur 2 wird die Führung der Schmelzekanäle in der Düse (5) genauer dargestellt. Schmelzekanal (3) verzweigt sich in eine Vielzahl an individuellen Schmelzekanälen (3a -n). Schmelzekanal (4) verzweigt sich in eine Vielzahl an individuellen Schmelzekanälen (4a -n). Die individuellen Schmelzekanäle (4a - n) münden jeweils in axialer Richtung ins Zentrum eines Schmelzekanals (3a -n). Die Wandstärken der Leitungen für die Schmelzekanäle (4a - n) sind zum Austritt hin graduell verringert, was durch eine Reduktion der Aussendurchmesser erfolgt. Der Innendurchmesser der äusseren Schmelzekanäle (3a - n) wird reduziert bevor die Schmelzen zusammengeführt werden.

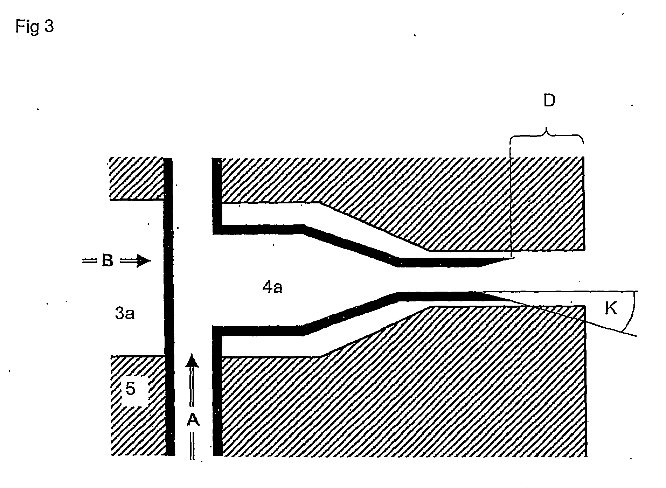

Figur 3 zeigt ebenfalls einen Ausschnitt aus einer Düse (5), wobei nur ein äusserer Schmelzekanal (3a), durch den Polymer B fliesst, und ein innerer Schmelzekanal (4a), durch den Polymer B fliesst, dargestellt sind. Die Wandstärken der Leitung für den Schmelzekanal (4a) ist zum Austritt hin graduell verringert, was durch eine Erweiterung des Innendurchmessers erfolgt. Der Innendurchmesser des äusseren Schmelzekanals (3a) bleibt konstant. Ebenfalls sichtbar ist der Abstand (D) zwischen den Austrittsöffnungen der inneren und äusseren Schmelzekanäle sowie der Konuswinkel (K) mit dem der Innendurchmesser der Leitung für den Schmelzekanal (4a) zum Austritt hin erweitert wird.

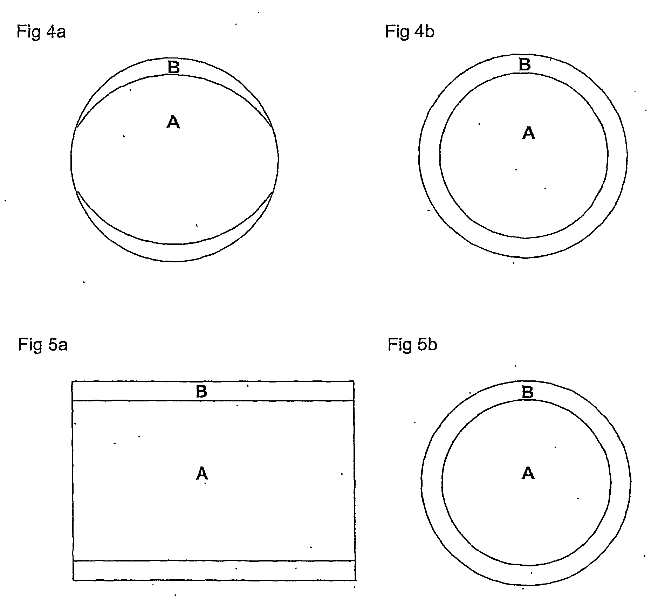

Figur 4 zeigt Schnittbilder (4a Längsschnitt und 4b Querschnitt) durch ein erfindungsgemässes Granulat das direkt am Austritt aus dem Schmelzekanal geschnitten wurden, wie dies zum Beilspiel durch Unterwassergranulation erfolgt. Die ursprünglich zylindrische Form ändert dabei in eine im Wesentlichen runde Form. An den Schnittflächen bleibt eine nicht von der Aussenschicht (Polymer B) bedeckte Fläche bestehen.

Figur 5 zeigt Schnittbilder (5a Längsschnitt und 5b Querschnitt) durch ein erfindungsgemässes Granulat das nach dem Verfestigen geschnitten wurden, wie dies zum Beilspiel durch Stranggranulation erfolgt. Die ursprünglich zylindrische Form bleibt im Wesentlichen erhalten. An den Schnittflächen bleibt eine nicht von der Aussenschicht (Polymer B) bedeckte Fläche bestehen.

## Patentansprüche

1. Verfahren zur Herstellung eines teilkristallinen Polymeren umfassend die Schritte:
a) Herstellen einer Polymerschmelze A aus einem kristallisierbaren Polymer, welches Polyethylenterephthalat oder Copolymere von Polyethylenterephthalat umfasst,
b) Herstellen einer Polymerschmelze B aus einem kristallisierbaren Polymer, wobei die Polymerschmelze B Polyethylenterephthalat oder Copolymere von Polyethylenterephthalat umfasst,
c) Zusammenführen der Polymerschmelzen A und B in einer Vielzahl von Schmelzekanälen, wobei die Polymerschmelze B im Wesentlichen eine Aussenschicht und die Polymerschmelze A im Wesentlichen eine Innenschicht bildet,
d) Formen von Partikeln und Verfestigen der Polymerschmelzen, wobei das Formen der Partikel vor oder nach dem Verfestigen erfolgen kann, wobei zwischen 50% und 95% der Oberfläche der Partikel aus Polymer B besteht, **gekennzeichnet durch** den Schritt:
e) Anheben des Kristallisationsgrades der Polymerpartikel, wobei das **durch** Verfestigen von Polymerschmelze B erzeugte Polymer B eine höhere Kristallisationsrate aufweist als das durch Verfestigen von Polymerschmelze A erzeugte Polymer A, Polymer A und B insgesamt zwischen 5 und 25 mol% an Copolymer aufweisen und mit einer mittleren Verweilzeit von weniger als 10 Mal der Kristallisationshalbwertszeit von Polymer A, auf einen Kristallisationsgrad von zwischen 20% und 50% kristallisiert werden.

2. Verfahren gemäss Anspruch 1, **dadurch gekennzeichnet, dass** Polymer B einen geringeren Anteil an Comonomer aufweist als Polymer A.

3. Verfahren gemäss einem der vorhergehenden Ansprüche, **dadurch gekennzeichnet, dass** Polymerschmelze B eine höhere Menge an Nukleierungsmittel enthält als Polymerschmelze A.

4. Verfahren gemäss einem der vorhergehenden Ansprüche, **dadurch gekennzeichnet, dass** Polymerschmelze B ein Treibmittel enthält.

5. Verfahren gemäss einem der vorhergehenden Ansprüche, **dadurch gekennzeichnet, dass** Polymerschmelze B eine höhere Menge an Lösemitteln enthält als Polymerschmelze A.

6. Verfahren gemäss einem der vorhergehenden Ansprüche, **dadurch gekennzeichnet, dass** Polymerschmelze B Polymer A und zumindest eine weitere Komponente zur Kristallisationsbeschleunigung, wie Nukleierungsmittel, Lösemittel oder Treibmittel, umfasst.

7. Verfahren gemäss einem der vorhergehenden Ansprüche, **dadurch gekennzeichnet, dass** Polymerschmelze A eine grössere Menge an Weichmachern enthält als Polymerschmelze B.

8. Verfahren gemäss einem der vorhergehenden Ansprüche, **dadurch gekennzeichnet, dass** Polymer A und B insgesamt zwischen 7 und 20 mol% an Copolymer aufweisen.

9. Verfahren gemäss einem der vorhergehenden Ansprüche, **dadurch gekennzeichnet, dass** Polymer A und B mit einer mittleren Verweilzeit von weniger als 6 Mal, der Kristallisationshalbwertszeit von Polymer A, auf einen Kristallisationsgrad von zwischen 20% und 50% kristallisiert werden.

10. Verfahren gemäss einem der vorhergehenden Ansprüche, **dadurch gekennzeichnet, dass** das Zusammenführen der Polymerschmelzen in einer Düse erfolgt, in der eine Vielzahl von Polymersträngen geformt werden, die direkt am Düsenaustritt oder nach dem Durchlaufen einer Kühistrecke zu Granulaten geschnitten werden.

11. Verfahren gemäss einem der vorhergehenden Ansprüche, **dadurch gekennzeichnet, dass** mehr als 65% der Oberfläche der Partikel aus Polymer B besteht.

12. Verfahren gemäss einem der vorhergehenden Ansprüche, **dadurch gekennzeichnet, dass** zwischen 50% und 95% des Volumens der Partikel, insbesondere Granulate, aus Polymer A besteht.

13. Verfahren gemäss Anspruch 12, **dadurch gekennzeichnet, dass** mehr als 65% des Volumens der Partikel aus Polymer A besteht.

14. Verfahren gemäss einem der vorhergehenden Ansprüche, **dadurch gekennzeichnet, dass** das Anheben des Kristallisationsgrades der Polymerpartikel direkt im Anschluss an die Partikelherstellung erfolgt, wobei die Partikel auf einem Temperaturniveau oberhalb der Glasübergangstemperatur von Polymer A gehalten werden.

15. Verfahren gemäss Anspruch 14, **dadurch gekennzeichnet, dass** die Partikel auf einem Temperaturniveau über 80°C gehalten werden.

16. Verfahren gemäss einem der vorhergehenden Ansprüche, **dadurch gekennzeichnet, dass** nach dem Schritt zum Anheben des Kristallisationsgrades ein weiterer Schritt zur Polykondensation in fester Phase folgt.

17. Polymergranulat bestehend aus zumindest einem Polymer A, das den inneren Bereich des Granulates umfasst und einem Polymer B, das zwischen 50% und 95% des Oberflächenbereichs des Granulates umfasst, wobei Polymer A und Polymer B Polyethylenterephthalat oder Copolymere von Polyethylenterephthalat umfassen, **dadurch gekennzeichnet, dass** das Polymer B eine höhere Kristallisationsrate aufweist als das Polymer A, Polymer A und B insgesamt zwischen 5 und 25 mol% an Copolymer aufweisen und mit einer mittleren Verweilzeit von weniger als 10 Mal der Kristallisationshalbwertszeit von Polymer A, auf einen Kristallisationsgrad von zwischen 20% und 50% kristallisierbar sind.

18. Polymergranulat gemäss Anspruch 17, **dadurch gekennzeichnet, dass** Polymer B einen geringeren Anteil an Comonomer aufweist als Polymer A.

19. Polymergranulat gemäss Anspruch 17 oder 18, **dadurch gekennzeichnet, dass** Polymer B eine höhere Menge an Nukleierungsmittel enthält als Polymer A.

20. Polymergranulat gemäss einem der Ansprüche 17 bis 19, **dadurch gekennzeichnet, dass** Polymer B stärker expandiert ist als Polymer A.

21. Polymergranulat gemäss einem der Ansprüche 17 bis 20, **dadurch gekennzeichnet, dass** Polymer B eine höhere Menge an Lösemitteln enthält als Polymer A.

22. Polymergranulat gemäss einem der Ansprüche 17 bis 21, **dadurch gekennzeichnet, dass** Polymer B Polymer A und zumindest eine weitere Komponente zur Kristallisationsbeschleunigung, wie Nukleierungsmittel, Lösemittel oder eine durch ein Treibmittel verursachte Vororientierung, umfasst.

23. Polymergranulat gemäss einem der Ansprüche 17 bis 22, **dadurch gekennzeichnet, dass** Polymer A eine grössere Menge an Weichmachern enthält als Polymer B.

24. Polymergranulat gemäss einem der Ansprüche 17 bis 23, **dadurch gekennzeichnet, dass** mehr als 65% der Oberfläche der Granulate aus Polymer B besteht.

25. Polymergranulat gemäss einem der Ansprüche 17 bis 24, **dadurch gekennzeichnet, dass** zwischen 50% und 95% des Volumens der Granulate aus Polymer A besteht.

26. Polymergranulat gemäss Anspruch 25, **dadurch gekennzeichnet, dass** mehr als 65% des Volumens der Granulate aus Polymer A besteht.

## Claims

1. Process for producing a partly crystalline polymer comprising the steps of:
a) producing a polymer melt A from a crystallizable polymer comprising polyethylene terephthalate or copolymers of polyethylene terephthalate,
b) producing a polymer melt B from a crystallizable polymer, wherein the polymer melt B comprises polyethylene terephthalate or copolymers of polyethylene terephthalate,
c) combining the polymer melts A and B in a multiplicity of melt channels, wherein the polymer melt B forms essentially an outer layer and the polymer melt A forms essentially an inner layer,
d) moulding of particles and solidifying the polymer melts, wherein the moulding of particles can be effected before or after the solidifying, wherein between 50% and 95% of the surface area of particles consists of polymer B, **characterized by** the step of
e) raising the crystallinity of the polymer particles,
wherein polymer B, produced by solidifying polymer melt B, has a higher rate of crystallization than polymer A, produced by solidifying polymer melt A, polymers A and B together include between 5 and 25 mol% of copolymer and are crystallized to a crystallinity of between 20% and 50% with an average residence time of less than 10 times the crystallization half-value period of polymer A.

2. Process according to Claim 1, **characterized in that** polymer B has a lower fraction of comonomer than polymer A.

3. Process according to either preceding claim, **characterized in that** polymer melt B contains a higher amount of nucleating agent than polymer melt A.

4. Process according to any preceding claim, **characterized in that** polymer melt B contains a blowing agent.

5. Process according to any preceding claim, **characterized in that** polymer melt B contains a higher amount of solvents than polymer melt A.

6. Process according to any preceding claim, **characterized in that** polymer melt B comprises polymer A and at least one further component for crystallization acceleration, such as nucleating agent, solvent or blowing agent.

7. Process according to any preceding claim, **characterized in that** polymer melt A contains a larger amount of plasticizers than polymer melt B.

8. Process according to any preceding claim, **characterized in that** polymers A and B together include between 7 and 20 mol% of copolymer.

9. Process according to any preceding claim, **characterized in that** polymers A and B are crystallized to a crystallinity of between 20% and 50% with an average residence time of less than 6 times the crystallization half-value period of polymer A.

10. Process according to any preceding claim, **characterized in that** the step of combining the polymer melts is effected in a die in which a multiplicity of polymer strands are moulded which are cut into pellets directly at the point of exit from the die or after passing through a cooling zone.

11. Process according to any preceding claim, **characterized in that** more than 65% of the surface area of the particles consists of polymer B.

12. Process according to any preceding claim, **characterized in that** between 50% and 95% of the volume of the particles, especially pellets, consists of polymer A.

13. Process according to Claim 12, **characterized in that** more than 65% of the volume of the particles consists of polymer A.

14. Process according to any preceding claim, **characterized in that** the step of raising the crystallinity of the polymer particles is effected directly following the particle-producing step, wherein the particles are maintained at a temperature level above the glass transition temperature of polymer A.

15. Process according to Claim 14, **characterized in that** the particles are maintained at a temperature level above 80°C.

16. Process according to any preceding claim, **characterized in that** the step of raising the crystallinity is followed by a further step of solid-state polycondensation.

17. Polymer pellet material consisting of at least a polymer A, which comprises the inner region of the pellet, and a polymer B, which comprises between 50% and 95% of the surface region of the pellet, wherein polymer A and polymer B comprise polyethylene terephthalate or copolymers of polyethylene terephthalate, **characterized in that** said polymer B has a higher crystallization rate than said polymer A, polymers A and B together include between 5 and 25 mol% of copolymer and are crystallizable to a crystallinity of between 20% and 50% with an average residence time of less than 10 times the crystallization half-value period of polymer A.

18. Polymer pellet material according to Claim 17, **characterized in that** polymer B has a lower fraction of comonomer than polymer A.

19. Polymer pellet material according to Claim 17 or 18, **characterized in that** polymer B contains a higher amount of nucleating agent than polymer A.

20. Polymer pellet material according to any of Claims 17 to 19, **characterized in that** polymer B has undergone greater expansion than polymer A.

21. Polymer pellet material according to any of Claims 17 to 20, **characterized in that** polymer B contains a higher amount of solvents than polymer A.

22. Polymer pellet material according to any of Claims 17 to 21, **characterized in that** polymer B comprises polymer A and at least one further component for crystallization acceleration, such as nucleating agent, solvent or a preorientation caused by a blowing agent.

23. Polymer pellet material according to any of Claims 17 to 22, **characterized in that** polymer A contains a larger amount of plasticizers than polymer B.

24. Polymer pellet material according to any of Claims 17 to 23, **characterized in that** more than 65% of the surface area of the pellets consists of polymer B.

25. Polymer pellet material according to any of Claims 17 to 24, **characterized in that** between 50% and 95% of the volume of the pellets consists of polymer A.

26. Polymer pellet material according to Claim 25, **characterized in that** more than 65% of the volume of the pellets consists of polymer A.

## Revendications

1. Procédé pour la préparation d'un polymère partiellement cristallin, comprenant les étapes
a) préparation d'une masse fondue de polymère A à partir d'un polymère cristallisable, qui comprend du poly(téréphtalate d'éthylène) ou des copolymères de poly(téréphtalate d'éthylène),
b) préparation d'une masse fondue de polymère B à partir d'un polymère cristallisable, la masse fondue de polymère B comprenant du poly(téréphtalate d'éthylène) ou des copolymères de poly(téréphtalate d'éthylène),
c) réunion des masses fondues de polymère A et B dans une multitude de canaux à masse fondue, la masse fondue de polymère B formant essentiellement une couche extérieure et la masse fondue de polymère A formant essentiellement une couche interne,
d) façonnage de particules et solidification des masses fondues de polymère, le façonnage des particules pouvant avoir lieu avant ou après la solidification, la surface des particules étant constituée par entre 50% et 95% de polymère B **caractérisé par** l'étape :
e) élévation du degré de cristallinité des particules polymères,
le polymère B obtenu par la solidification de la masse fondue de polymère B présentant une vitesse de cristallisation plus élevée que le polymère A obtenu par la solidification de la masse fondue de polymère A, le polymère A et le polymère B présentant au total entre 5 et 25% en mole de copolymère et étant cristallisés à un temps de séjour moyen inférieur à 10 fois le demi-temps de cristallisation du polymère A, à un degré de cristallisation entre 20% et 50%.

2. Procédé selon la revendication 1, **caractérisé en ce que** le polymère B présente une proportion plus faible de comonomère que le polymère A.

3. Procédé selon l'une quelconque des revendications précédentes, **caractérisé en ce que** la masse fondue de polymère B présente une quantité plus élevée d'agent de nucléation que la masse fondue de polymère A.

4. Procédé selon l'une quelconque des revendications précédentes, **caractérisé en ce que** la masse fondue de polymère B contient un agent de gonflement.

5. Procédé selon l'une quelconque des revendications précédentes, **caractérisé en ce que** la masse fondue de polymère B présente une quantité plus élevée de solvants que la masse fondue de polymère A.

6. Procédé selon l'une quelconque des revendications précédentes, **caractérisé en ce que** la masse fondue de polymère B comprend du polymère A et au moins un autre composant pour accélérer la cristallisation, tel qu'un agent de nucléation, un solvant ou un agent gonflant.

7. Procédé selon l'une quelconque des revendications précédentes, **caractérisé en ce que** la masse fondue de polymère A présente une plus grande quantité de plastifiants que la masse fondue de polymère B.

8. Procédé selon l'une quelconque des revendications précédentes, **caractérisé en ce que** le polymère A et le polymère B présentent au total entre 7 et 20% en mole de copolymère.

9. Procédé selon l'une quelconque des revendications précédentes, **caractérisé en ce que** le polymère A et le polymère B sont cristallisés à un temps de séjour moyen inférieur à 6 fois le demi-temps de cristallisation du polymère A, à un degré de cristallisation entre 20% et 50%.

10. Procédé selon l'une quelconque des revendications précédentes, **caractérisé en ce que** la réunion des masses fondues de polymère a lieu dans une filière dans laquelle sont formés une multitude de brins polymères qui sont coupés en granulats directement à la sortie de la filière ou après le passage dans une zone de refroidissement.

11. Procédé selon l'une quelconque des revendications précédentes, **caractérisé en ce que** plus de 65% de la surface des particules sont formés par le polymère B.

12. Procédé selon l'une quelconque des revendications précédentes, **caractérisé en ce qu'**entre 50% et 95% du volume des particules, en particulier des granulats, sont formés par le polymère A.

13. Procédé selon la revendication 12, **caractérisé en ce que** plus de 65% du volume des particules sont formés par le polymère A.

14. Procédé selon l'une quelconque des revendications précédentes, **caractérisé en ce que** l'élévation du degré de cristallisation des particules polymères a lieu directement après la préparation des particules, les particules étant maintenues à un niveau de température au-dessus de la température de transition vitreuse du polymère A.

15. Procédé selon la revendication 14, **caractérisé en ce que** les particules sont maintenues à un niveau de température supérieur à 80°C.

16. Procédé selon l'une quelconque des revendications précédentes, **caractérisé en ce qu'**après l'étape d'élévation du degré de cristallisation, une autre étape de polycondensation en phase solide suit.

17. Granulat de polymère, constitué par au moins un polymère A, qui englobe la zone interne du granulat et un polymère B, qui englobe entre 50% et 95% de la zone de surface du granulat, le polymère A et le polymère B comprenant du poly(téréphtalate d'éthylène) ou des copolymères de poly(téréphtalate d'éthylène), **caractérisé en ce que** le polymère B présente une vitesse de cristallisation plus élevée que le polymère A, le polymère A et le polymère B présentent au total entre 5 et 25% en mole de copolymère et sont cristallisables à un temps de séjour moyen inférieur à 10 fois le demi-temps de cristallisation du polymère A, à un degré de cristallisation entre 20% et 50%.

18. Granulat de polymère selon la revendication 17, **caractérisé en ce que** le polymère B présente une proportion plus faible de comonomère que le polymère A.

19. Granulat de polymère selon la revendication 17 ou 18, **caractérisé en ce que** le polymère B présente une quantité plus élevée d'agent de nucléation que le polymère A.

20. Granulat de polymère selon l'une quelconque des revendications 17 à 19, **caractérisé en ce que** le polymère B est plus fortement expansé que le polymère A.

21. Granulat de polymère selon l'une quelconque des revendications 17 à 20, **caractérisé en ce que** le polymère B contient une quantité plus élevée de solvants que le polymère A.

22. Granulat de polymère selon l'une quelconque des revendications 17 à 21, **caractérisé en ce que** le polymère B comprend du polymère A et au moins un autre composant pour accélérer la cristallisation, tel qu'un agent de nucléation, un solvant ou une préorientation, provoquée par un agent gonflant.

23. Granulat de polymère selon l'une quelconque des revendications 17 à 22, **caractérisé en ce que** le polymère A présente une plus grande quantité de plastifiants que le polymère B.

24. Granulat de polymère selon l'une quelconque des revendications 17 à 23, **caractérisé en ce que** plus de 65% de la surface des granulats sont formés par le polymère B.

25. Granulat de polymère selon l'une quelconque des revendications 17 à 24, **caractérisé en ce qu'**entre 50% et 95% du volume des granulats sont formés par le polymère A.

26. Granulat de polymère selon la revendication 25, **caractérisé en ce que** plus de 65% du volume des granulats sont formés par le polymère A.
